# EUROPÄISCHE PATENTSCHRIFT

(11) **EP 1 305 181 B1**
(45) Veröffentlichungstag und Bekanntmachung des Hinweises auf die Patenterteilung: **09.07.2008**
(21) Anmeldenummer: 01960602.9
(22) Anmeldetag: 01.08.2001
(51) Int. Cl.: B60W 30/16, B60W 10/18, B60W 10/10, G08G 1/16, B60W 30/08

(54) **VERFAHREN UND EINRICHTUNG ZUR SELBSTTÄTIGEN GESCHWINDIGKEITSEINSTELLUNG IN EINEM FAHRZEUG**
METHOD AND DEVICE FOR AUTOMATIC SPEED ADJUSTMENT IN A VEHICLE
PROCEDE ET DISPOSITIF POUR L'ADAPTATION AUTOMATIQUE DE LA VITESSE D'UN VEHICULE

(30) Priorität: 03.08.2000 DE 10037826
(43) Veröffentlichungstag der Anmeldung: 02.05.2003
(73) Patentinhaber: Daimler AG, 70327 Stuttgart (DE)
(72) Erfinder: KURZ, Gerhard, 73240 Wendlingen (DE); MULTHAUPT, Hans-Dieter, 70599 Stuttgart (DE); RÖHRIG-GERICKE, Thomas, 71093 Weil im Schönbuch (DE); SCHÖB, Reinhold, 71126 Gäufelden (DE); TRÖSTER, Harry, 71732 Tamm (DE)
(86) Internationale Anmeldenummer: PCT/EP2001/008875
(87) Internationale Veröffentlichungsnummer: WO 2002/012011

(56) Entgegenhaltungen:
- EP-A- 1 008 482
- DE-A- 4 100 993
- DE-A- 19 639 907
- US-A- 5 493 302

## Beschreibung

Die Erfindung bezieht sich auf ein Verfahren und eine Einrichtung zur selbsttätigen Geschwindigkeitseinstellung in einem Fahrzeug nach dem Oberbegriff des Anspruches 1 bzw. 13.

In der Druckschrift DE 41 00 993 A1 wird ein System zur selbstständigen Fahrzeugsteuerung der Fahrzeug-Längsbewegung und der Folgefahrt in Bezug auf ein vorausfahrendes Fahrzeug beschrieben. Gemäß diesem System werden mittels einer Messvorrichtung der Abstand und die Relativgeschwindigkeit zwischen dem Fahrzeug und dem vorausfahrenden Fahrzeug ermittelt, wobei die Messsignale einer Regel- und Steuereinheit zugeführt werden, in der aus den Werten der Messsignale unter Berücksichtigung einer vorgegebenen Umformbeziehung Stellsignale generiert werden, welche Stellorganen im Fahrzeug zur selbsttätigen Einstellung der Fahrzeug-Istgeschwindigkeit und der Fahrzeug-Sollgeschwindigkeit zugeführt werden.

Dieses, eine Folgesteuereinrichtung umfassende System ermöglicht auch einen Betrieb des Fahrzeugs im Stop-and-Go-Modus. In diesem Modus fährt das nachfolgende Fahrzeug selbsttätig aus dem Stillstand an, falls auch das vorausfahrende Fahrzeug anfährt und außerdem der Fahrzeugabstand kleiner ist als ein vorgegebener Soll-Fahrzeugabstand. Das folgende Fahrzeug beschleunigt aus dem Stillstand heraus, wobei zeitweilig die Fahrzeuggeschwindigkeit des folgenden Fahrzeugs diejenige des vorausfahrenden Fahrzeugs solange übersteigen kann, bis der Soll-Fahrzeugabstand wieder hergestellt ist. Der Soll-Fahrzeugabstand wird auch eingehalten, wenn das vorausfahrende Fahrzeug die Geschwindigkeit reduziert. Kommt das vorausfahrende Fahrzeug zum Stillstand, wird auch die Geschwindigkeit des folgenden Fahrzeugs bis auf Null reduziert.

Dieses System ermöglicht zwar ein selbsttätiges Nachfolgen eines Fahrzeuges zu einem vorausfahrenden Fahrzeug. Insbesondere im niederen Geschwindigkeitsbereich besteht dabei das Problem, dass ein häufiges Anfahren aus dem Stillstand bis auf unterschiedlich hohe Geschwindigkeiten und ein erneutes Abbremsen bis zum Stillstand zu Komforteinbußen führen kann. Darüber hinaus können auch Gefahrensituationen entstehen für den Fall, dass bei Staufahrten kurzzeitig eine höhere Geschwindigkeit in der Fahrzeugschlange erreicht wird und in dieser Situation ein Fahrzeug in die Lücke zwischen nachfolgendem und vorausfahrendem Fahrzeug einschert, woraufhin das System im nachfolgenden Fahrzeug einen vergleichsweise starken Bremsvorgang einleiten muss, der die Gefahr von Auffahrunfällen mit sich zieht. Dieses Problem wird auch dadurch verstärkt, dass die Geschwindigkeit des Folgefahrzeugs kurzzeitig die Geschwindigkeit des vorausfahrenden Fahrzeugs überschreiten kann, so dass das Folgefahrzeug gegebenenfalls von einem hohen Geschwindigkeitsniveau ausgehend abbremsen muss.

Der Erfindung liegt das Problem zu Grunde, den Fahrkomfort und die Fahrsicherheit in Fahrzeugen mit selbsttätiger Geschwindigkeitseinstellung zu verbessern.

Dieses Problem wird erfindungsgemäß mit den Merkmalen des Anspruches 1 bzw. 13 gelöst. Die Unteransprüche enthalten vorteilhafte Weiterbildungen.

Nach dem erfindungsgemäßen Verfahren wird zunächst eine maximal zulässige Grenzgeschwindigkeit entweder vorgegeben oder aus aktuellen Mess- und Zustandsgrößen des Fahrzeugs ermittelt. Falls die Messung ergibt, dass das Hindernis - beispielsweise ein vorausfahrendes Fahrzeug - sich vom Fahrzeug entfernt, so wird eine vom Fahrzeug einzunehmende Fahrzeug-Sollgeschwindigkeit ermittelt, die vom Fahrzeug nicht überschritten werden darf. Die Sollgeschwindigkeit wird auf den kleineren Wert eines Wertepaares gebildet aus Grenzgeschwindigkeit und der aktuellen Geschwindigkeit des Hindernisses - insbesondere des vorausfahrenden Fahrzeuges - gesetzt. Die Fahrzeug-Istgeschwindigkeit wird auf die Sollgeschwindigkeit eingeregelt.

Mit diesem Verfahren ist sicher gestellt, dass die Geschwindigkeit des Folgefahrzeugs einen Maximalwert nicht übersteigen kann, nämlich die vorzugebende bzw. zu ermittelnde Grenzgeschwindigkeit. Diese Grenzgeschwindigkeit kann vom Folgefahrzeug nicht überschritten werden, auch wenn die Geschwindigkeit des vorausfahrenden Fahrzeugs über die Grenzgeschwindigkeit ansteigt. In diesem Fall nimmt zwar der Abstand zwischen Fahrzeug und vorausfahrendem Fahrzeug zu; dies bietet aber den Fahrzeuginsassen des Folgefahrzeugs einen erheblich größeren Komfort, weil insbesondere bei Staufahrten kurzfristige Beschleunigungs- und insbesondere Abbremsvorgänge entfallen, da nunmehr das Folgefahrzeug mit im Wesentlichen konstanter Geschwindigkeit fährt. Darüber hinaus wird auch die Sicherheit verbessert, weil Fahrzeuge, die in die entstehende Lücke zwischen dem Folgefahrzeug und dem vorausfahrenden Fahrzeug einscheren, keine abrupten Bremsvorgänge im Folgefahrzeug mehr verursachen, da das Folgefahrzeug sich auf einem relativ niedrigen Geschwindigkeitsniveau bewegt.

Die Einhaltung einer konstanten Geschwindigkeit für den Fall, dass das vorausfahrende Fahrzeug eine die Grenzgeschwindigkeit übersteigende Fahrzeuggeschwindigkeit einnimmt, hat bei Staufahrten zur Folge, dass das Folgefahrzeug sich mit kontinuierlicher Geschwindigkeit fortbewegt und auf ein erneut sich bildendes Stauende gleichmäßig zufährt und zum vorausfahrenden Fahrzeug aufschließt. Ein Ziehharmonikaeffekt, welcher sich üblicherweise bei Staufahrten dadurch bildet, dass aus dem Stillstand oder aus sehr niedrigen Geschwindigkeiten heraus hochbeschleunigt und anschließend abrupt wieder abgebremst wird, wird durch die gleichmäßige Fortbewegungsart vermieden. Zusätzlich zur Verbesserung des Fahrkomforts und der Erhöhung der Fahrsicherheit hat dies auch einen geringeren Schadstoffausstoß zur Folge.

In bevorzugter Weiterbildung wird die selbsttätige Geschwindigkeitseinstellung für den Fall aktiviert, dass der Abstand zwischen dem Fahrzeug und dem vorausfahrenden Fahrzeug eine Nahgrenze unterschreitet. Dieses Kriterium kann insbesondere in Verbindung mit einer niedrig angesetzten Grenzgeschwindigkeit, welche die Bedeutung einer Kriechgeschwindigkeit hat, für die Auslösung der selbsttätigen Geschwindigkeitseinstellung bei Fahrten im Stau oder im dichten Stadtverkehr dienen, da bei derartigen Fahrten eine Begrenzung der Fahrzeug-Istgeschwindigkeit üblicherweise keine negativen Auswirkungen hat, weil die Durchschnittsgeschwindigkeit ohnehin vergleichsweise gering ist. Auf Grund der selbsttätigen Abbremsung bis zum Fahrzeugstillstand ist die Gefahr eines versehentlichen Auffahrens auf das vorausliegende Hindernis ausgeschlossen.

Das Verfahren kann auch bei anderen Hindernissen als Fahrzeuge eingesetzt werden. Es ist insbesondere möglich, das Verfahren als Einparkhilfe zu verwenden, wobei auch feststehende Hindernisse erkannt werden und eine Abbremsung des Fahrzeugs bis zum Stillstand auslösen können.

Nach der Aktivierung der selbsttätigen Geschwindigkeitseinstellung kann es in bevorzugter Weiterbildung angezeigt sein, dass das Fahrzeug trotz einer fortdauernden Bewegung des vorausliegenden Hindernisses selbsttätig bis zum Stillstand abgebremst wird für den Fall, dass die Distanz zwischen Fahrzeug und Hindernis einen Minimalabstand unterschreitet. Hierdurch wird ein Mindest-Sicherheitsabstand zwischen Fahrzeug und Hindernis gewährleistet. Sobald der Minimalabstand wieder überschritten wird, wird das Fahrzeug zweckmäßig wieder in Gang gesetzt.

Gemäß einer weiteren vorteilhaften Ausführung wird zumindest in definierten Fahrsituationen, gegebenenfalls über die gesamte Aktivierungszeit der selbsttätigen Geschwindigkeitseinstellung, ein Mindest-Bremsmoment über die Fahrzeugbremse erzeugt, um bei Bremsvorgängen eine möglichst geringe Fahrzeugreaktionszeit zu erzielen und dadurch sicher zu stellen, dass das Folgefahrzeug bei einem sich verlangsamenden vorausfahrenden Fahrzeug oder bei einem in die Lücke einscherenden Drittfahrzeug in kürzest möglicher Zeit abgebremst werden kann. Das Mindestbremsmoment wird vorteilhaft in allen dynamischen Übergangsphasen des Folgefahrzeugs erzeugt, also insbesondere in Beschleunigungs- und Abbremsphasen. Gegebenenfalls kann aber auch bei konstanter Fahrzeuggeschwindigkeit ein Bremsmoment angelegt werden; bei konstanter Geschwindigkeit und auch in Beschleunigungsphasen ist jedoch das Bremsmoment geringer als das Antriebsmoment.

Das Bremsmoment kann gegebenenfalls auch zumindest zeitweise reduziert werden, insbesondere, falls der Abstand eine Distanzschwelle überschreitet, um eine Überlastung des Bremssystems zu verhindern.

Die selbsttätige Geschwindigkeitseinstellung wird vorteilhaft abgeschaltet, falls vom Fahrer eine Fahrzeug-Istgeschwindigkeit gewünscht wird, beispielsweise durch Überdrücken des Beschleunigungspedals, welche die Fahrzeug-Sollgeschwindigkeit übersteigt. In diesem Fall hat der Fahrerwunsch Vorrang vor der automatischen Geschwindigkeitseinstellung. Gegebenenfalls kann noch ein die Sollgeschwindigkeit überschreitender Toleranzbereich berücksichtigt werden, innerhalb dem der Fahrer durch Überdrücken des Beschleunigungspedals das Fahrzeug bewegen kann, ohne dass es sofort zu einer Abschaltung der selbsttätigen Geschwindigkeitseinstellung kommt. Eine Abschaltung wird in diesem Fall erst bei Überschreitung des Toleranzbereiches durchgeführt. Es wird hierdurch die Möglichkeit eröffnet, dass der Fahrer innerhalb des Toleranzbereiches einem sich schneller bewegenden, vorausfahrenden Fahrzeug durch Betätigen des Beschleunigungspedals nachfolgen kann und bei Rücknahme der Beschleunigungspedalbeaufschlagung dennoch die selbsttätige Geschwindigkeitseinstellung aktiviert bleibt.

Bei Abschaltung wird vorteilhaft ein eventuell anliegendes Bremsmoment nicht schlagartig, sondern gemäß einer vorgegebenen Kennlinie reduziert, um einen plötzlich auftretenden Ruck und damit einhergehende mögliche Irritationen des Fahrers zu vermeiden.

Die erfindungsgemäße Einrichtung zur selbsttätigen Geschwindigkeitseinstellung umfasst eine Messvorrichtung zur Ermittlung des Abstands und der Relativgeschwindigkeit zwischen dem Fahrzeug und einem Hindernis, insbesondere einem vorausfahrenden Fahrzeug, eine Regel- und Steuereinheit, in der in Abhängigkeit von Messsignalen, welche in der Messvorrichtung aufgenommen werden, Stellsignale generiert werden, über die Stellorgane im Fahrzeug einstellbar sind, welche das Fahrzeug zur selbsttätigen Angleichung der Fahrzeug-Istgeschwindigkeit an eine aus den Messsignalen gemäß einem vorgegebenen Zusammenhang zu ermittelnde Fahrzeug-Sollgeschwindigkeit veranlassen. Die Stellsignale, welche insbesondere die Bremsvorrichtung im Fahrzeug, das Motormanagement und/oder die Luftzufuhr regelnde Stelleinrichtungen beaufschlagen, werden in der Weise generiert, dass die Fahrzeug-Istgeschwindigkeit an eine Sollgeschwindigkeit angeglichen wird, welche die Geschwindigkeit des sich entfernenden Hindernisses nicht überschreitet und zugleich durch eine vorgegebene bzw. zu ermittelnde Grenzgeschwindigkeit limitiert wird. Diese Einrichtung zur selbsttätigen Geschwindigkeitseinstellung im Fahrzeug ist insbesondere zur Durchführung des vorgeschriebenen Verfahrens mit allen Verfahrensschritten geeignet.

Weitere vorteilhafte Ausgestaltungen sind den weiteren Ansprüchen, der Figurenbeschreibung und den Zeichnungen zu entnehmen.
Es zeigen:
- Fig. 1: eine schematische Darstellung eines mit selbsttätiger Geschwindigkeitseinstellung ausgerüsteten Fahrzeugs,
- Fig. 2: ein Ablaufdiagramm mit einzelnen Verfahrensschritten zur selbsttätigen Geschwindigkeitseinstellung eines Fahrzeugs, welches einem vorausfahrenden Fahrzeug nachfolgt,
- Fig. 3: die Fortsetzung des Ablaufdiagramms aus Fig. 2.

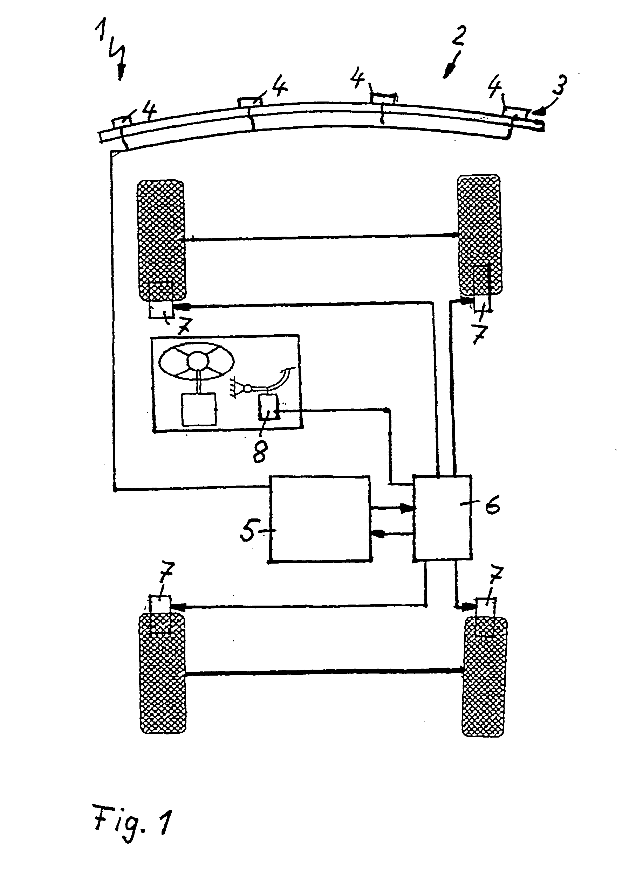

Das in Fig. 1 dargestellte Fahrzeug 1 ist mit einer Einrichtung 2 zur selbsttätigen Geschwindigkeitseinstellung, insbesondere im niedrigen Geschwindigkeitsbereich, ausgerüstet, die eine Messvorrichtung 3 mit Abstandssensoren 4 im Frontbereich des Fahrzeuges, eine Regel- und Steuereinheit 5, eine Bremseinrichtung 6, welche insbesondere als elektrohydraulische Bremse ausgestattet ist und über Stellsignale eingestellt werden kann, Radgeschwindigkeitssensoren 7 und einen Pedalgeber 8 zur Erfassung der Betätigung des Beschleunigungspedals umfasst. Zur selbsttätigen Geschwindigkeitseinstellung werden Messsignale aus den Abstandssensoren 4, welche den Abstand zwischen dem Fahrzeug 1 und einem vorausliegendem Hindernis, insbesondere einem vorausfahrenden Fahrzeug repräsentieren, in der Regel- und Steuereinheit 5 verarbeitet. Die Regel- und Steuereinheit 5 empfängt darüber hinaus Messsignale der Bremseinrichtung 6, der Radgeschwindigkeitssensoren 7 und des Pedalgebers 8. Aus den Messsignalen wird gemäß einem in der Regel- und Steuereinheit hinterlegten Zusammenhang eine Fahrzeug-Sollgeschwindigkeit ermittelt, die insbesondere vom Abstand zum vorausliegenden Hindernis und von der Relativgeschwindigkeit zwischen dem Fahrzeug und dem vorausliegenden bzw. vorausfahrenden Hindernis und darüber hinaus zweckmäßig von weiteren sicherheitsrelevanten Kriterien abhängt.

In der Regel- und Steuereinheit 5 werden Stellsignale erzeugt, welche der Bremseinrichtung 6 zur Erzeugung eines Bremsmomentes in der Fahrzeugbremse, dem Motormanagement zur Einstellung von Zündzeitpunkt und Kraftstoffeinspritzung und die Luftzufuhr zu den Zylindern regelnden Stellorganen zugeführt werden.

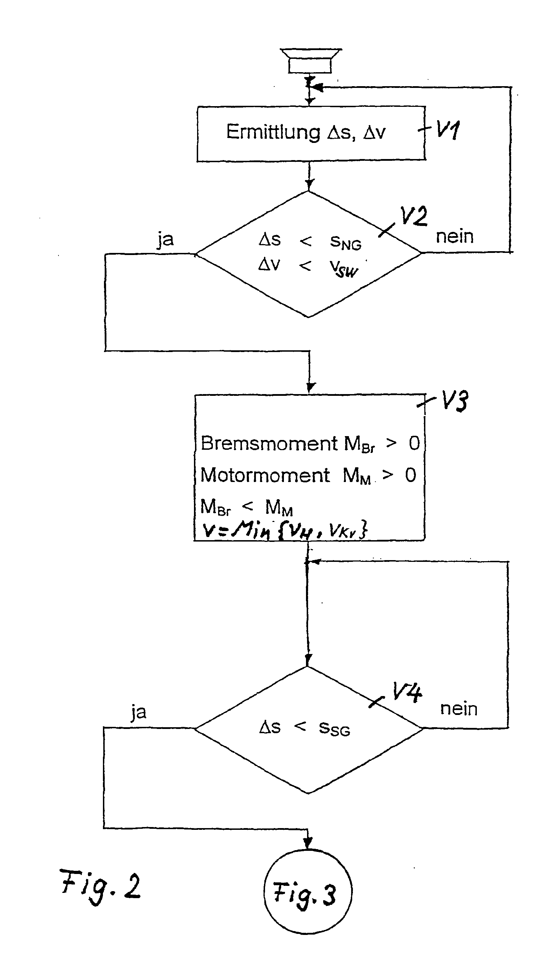

Gemäß dem in Fig. 2 dargestellten Ablaufdiagramm werden zunächst in einem ersten Verfahrensschritt V1 der Relativabstand Δs sowie die Relativgeschwindigkeit Δv zwischen dem Fahrzeug, welches mit selbsttätiger Geschwindigkeitseinstellung ausgerüstet ist, und einem vorausliegenden Hindernis, insbesondere einem vorausfahrenden Fahrzeug, ermittelt. Die Messung und Ermittlung des Relativabstands Δs und der Relativgeschwindigkeit Δv erfolgt unabhängig von der Aktivierung oder dem aktuellen Phase der selbsttätigen Geschwindigkeitseinstellung in regelmäßigen zeitlichen Abständen.

Die im folgenden Verfahrensschritt V2 durchzuführende Abfrage stellt eine Aktivierungsbedingung für die Aktivierung der selbsttätigen Geschwindigkeitseinstellung dar. Im Schritt V2 wird überprüft, ob der Relativabstand Δs eine Nahgrenze s_{NG} unterschreitet; ist dies nicht der Fall, erfolgt keine Aktivierung der selbsttätigen Geschwindigkeitseinstellung und es wird der Nein-Verzweigung entsprechend wieder zum ersten Verfahrensschritt V1 zurückgekehrt. Falls der Relativabstand Δs die Nahgrenze s_{NG} unterschreitet, wird vorteilhaft als weitere, zusätzlich zu erfüllende Bedingung überprüft, ob die Relativgeschwindigkeit Δv einen Schwellenwert v_{SW} unterschreitet. Ist dies nicht der Fall, wird wiederum entsprechend der Nein-Verzweigung zum Verfahrensschritt V1 zurückgekehrt. Ist dagegen die Relativgeschwindigkeit Δv kleiner als der Schwellenwert v_{SW}, so sind beide Bedingungen aus dem Verfahrensschritt V2 erfüllt; die selbsttätige Geschwindigkeitseinstellung wird aktiviert und es wird der Ja-Verzweigung entsprechend zum folgenden Verfahrensschritt V3 fortgefahren.

Die Nahgrenze S_{NG} und der Geschwindigkeits-Schwellenwert v_{SW} sind zweckmäßig fest vorgegebene Parameter, welche in der Regel- und Steuereinheit gespeichert sind. Alternativ hierzu kann es aber auch zweckmäßig sein, diese Werte adaptiv aus dem aktuellen Verkehrsgeschehen abzuleiten oder vom Fahrer vorzugeben. Schließlich kann es auch zweckmäßig sein, die beiden im Verfahrensschritt V2 abzuprüfenden Bedingungen nicht kumulativ, sondern alternativ abzuprüfen und vom Verfahrensschritt V2 zum folgenden Verfahrensschritt V3 fortzufahren, falls nur eine der Bedingungen aus dem Verfahrensschritt V2 erfüllt ist.

Im folgenden Verfahrensschritt V3 wird über die Bremseinrichtung des Fahrzeugs ein Bremsmoment M_{Br} > 0 erzeugt. Zugleich wird ein antreibendes Motormoment M_{M} > 0 generiert, wobei als zusätzliche Bedingung vorgegeben wird, dass das Bremsmoment M_{Br} kleiner ist als das Motormoment M_{M}, um ein selbsttätiges Fortbewegen des Fahrzeugs zu ermöglichen.

Im Verfahrensschritt V3 wird außerdem die aktuelle Geschwindigkeit v des Fahrzeugs auf das Minimum eines Wertepaares gesetzt, welches durch die Geschwindigkeit v_{H} des Hindernisses und eine Kriechgeschwindigkeit v_{Kr} gebildet wird. Die Geschwindigkeit v_{H} des Hindernisses kann in der Regel- und Steuereinheit aus der gemessenen bzw. berechneten Relativgeschwindigkeit Δv zwischen Fahrzeug und Hindernis und der Eigengeschwindigkeit v des Fahrzeugs ermittelt werden. Die Kriechgeschwindigkeit v_{Kr} stellt eine Grenzgeschwindigkeit dar, welche zweckmäßig als fester Wert vorgegeben wird und in der Regel- und Steuereinheit abgespeichert ist. Die Begrenzung der aktuellen Fahrzeuggeschwindigkeit v auf die Kriechgeschwindigkeit v_{Kr} stellt sicher, dass das Fahrzeug bei aktivierter selbsttätiger Geschwindigkeitseinstellung dem vorausfahrenden Hindernis zwar mit der gleichen Geschwindigkeit wie das Hindernis folgen kann, jedoch höchstens bis zur Kriechgeschwindigkeit v_{Kr}.

Im nächsten Verfahrensschritt V4 wird überprüft, ob der Relativabstand Δs nunmehr kleiner geworden ist als eine Stoppgrenzen s_{SG}, bei deren Unterschreitung das Fahrzeug bis zum Stillstand abgebremst wird. Ist dies nicht der Fall, wird der aktuelle Status beibehalten; es wird der Nein-Verzweigung entsprechend zu einer erneuten, zyklischen Überprüfung der Bedingung des Verfahrensschritts V4 zurückgekehrt. Die zyklische Überprüfung wird solange durchgeführt, bis die Bedingung des Verfahrensschritts V4 erfüllt ist.

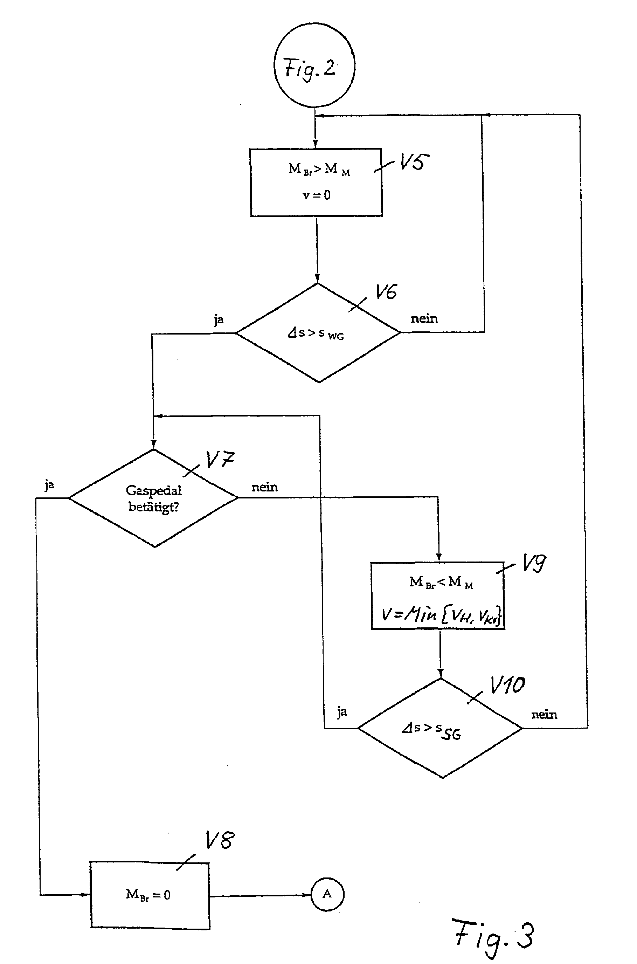

Falls der Relativabstand Δs die Stoppgrenze s_{SG} unterschreitet, wird der Ja-Verzweigung des Verfahrensschrittes 5 entsprechend zum folgenden Verfahrensschritt V5 fortgefahren (siehe Fig. 3), in welchem das Verhältnis von Motorbremsmoment M_{Br} und antreibendem Motormoment M_{M} umgekehrt wird, so dass nunmehr das Motorbremsmoment M_{Br} das Motormoment M_{M} übersteigt und das Fahrzeug bis zum Stillstand mit Geschwindigkeit v = 0 abgebremst wird.

Der folgende Verfahrensschritt V6 enthält eine Bedingung, mit der überprüft wird, ob das Fahrzeug selbsttätig weiterfahren kann. Hierzu wird überprüft, ob der Relativabstand Δs zwischen Fahrzeug und Hindernis eine Distanzschwelle s_{WG} überschreitet. Sofern dies nicht der Fall ist, wird entsprechend der Nein-Verzweigung des Verfahrensschrittes V6 wieder zum Verfahrensschritt V5 zurückgekehrt, das Fahrzeug verbleibt im Stillstand. Falls jedoch die Bedingung des Verfahrensschrittes V6 erfüllt ist, bedeutet dies, dass der Abstand zum vorausliegenden Hindernis sich vergrößert hat und die Bedingung für Weiterfahrt erfüllt ist. In diesem Fall wird der Ja-Verzweigung entsprechend zum folgenden Verfahrensschritt V7 fortgefahren.

Im Verfahrensschritt V7 erfolgt eine Überprüfung, ob das Beschleunigungs- bzw. Gaspedal vom Fahrer betätigt wird. Ist dies der Fall, wird die selbsttätige Geschwindigkeitseinstellung beendet, da der Fahrerwunsch Vorrang vor der selbsttätig gesteuerten Fahrzeugfahrt hat. Zweckmäßig wird hierbei jedoch berücksichtigt, ob die vom Fahrer erzeugte Gaspedalbetätigung unter den aktuellen äußeren Umständen eine höhere Geschwindigkeit ergeben würde als diejenige Geschwindigkeit, welche von der selbsttätigen Geschwindigkeitseinstellung vorgegeben wird; erst wenn dies der Fall ist, wird in die Ja-Verzweigung fortgefahren.

Bei einer entsprechenden Gaspedalbetätigung wird der Ja-Verzweigung des Verfahrensschrittes V7 entsprechend zum Verfahrensschritt V8 fortgefahren, in der das Motorbremsmoment M_{Br} auf Null reduziert wird, gegebenenfalls unter Beachtung einer Reduzierungs-Kennlinie. Das Verfahren ist nunmehr beendet, es kann zum Beginn des gesamten Ablaufs zum Verfahrensschritt V1 zurückgekehrt werden.

Falls keine Betätigung des Gaspedals vorliegt, wird gemäß der Nein-Verzweigung des Verfahrensschrittes V7 zum Verfahrensschritt V9 fortgefahren. Im Verfahrensschritt V9 wird das Motorbremsmoment M_{Br} auf einen Wert gesetzt, welcher kleiner ist als das antreibende Motormoment M_{M}, da nunmehr die Bedingungen für eine Weiterfahrt vorliegen und das Fahrzeug sich wieder in Bewegung setzen soll. Die aktuelle Fahrzeuggeschwindigkeit v wird wieder auf den kleineren Wert von Geschwindigkeit v_{H} des Hindernisses und Kriechgeschwindigkeit v_{Kr} gesetzt.

Im Verfahrensschritt V10 erfolgt nun eine Überprüfung, ob der Relativabstand Δs die Stoppgrenze s_{SG} überschreitet. Diese Überprüfung soll sicher stellen, dass das Fahrzeug nur dann selbsttätig in Gang gesetzt wird, wenn die einen Sicherheitsabstand repräsentierende Stoppgrenze s_{SG} überschritten ist. Ist dies nicht der Fall, wird der Nein-Verzweigung gemäß zum Verfahrensschritt V5 zurückgekehrt und das Fahrzeug bis zum Stillstand abgebremst. Andernfalls wird der Ja-Verzweigung entsprechend zum Verfahrensschritt V7 verzweigt, in welchem eine erneute Überprüfung durchgeführt wird, ob das Gaspedal betätigt wird.

## Patentansprüche

1. Verfahren zur selbsttätigen Geschwindigkeitseinstellung in einem Fahrzeug, bei dem der Abstand (Δs) und die Relativgeschwindigkeit (Δv) zwischen dem Fahrzeug (1) und einem Hindernis sensorisch ermittelt und der Berechnung eines fahrerunabhängig zu erzeugenden Bremsmomentes bzw. Antriebsmomentes zu Grunde gelegt werden, über die die Fahrzeug-Istgeschwindigkeit (vᵢₛₜ) selbsttätig an eine Fahrzeug-Sollgeschwindigkeit (vₛₒₗₗ) angeglichen wird,
**dadurch gekennzeichnet,**
**dass** eine maximal zulässige Grenzgeschwindigkeit (v_{Kr}) vorgegeben bzw. ermittelt wird und dass im Falle eines sich vom Fahrzeug (1) entfernenden Hindernisses die Fahrzeug-Sollgeschwindigkeit (vₛₒₗₗ) auf die Geschwindigkeit des Hindernisses (v_{H}), jedoch maximal auf die Grenzgeschwindigkeit (v_{Kr}) beschränkt wird.

2. Verfahren nach Anspruch 1,
**dadurch gekennzeichnet,**
**dass** die selbsttätige Geschwindigkeitseinstellung nur aktiv ist, solange der Abstand (Δs) zwischen Fahrzeug (1) und Hindernis eine Nahgrenze (s_{NG}) unterschreitet.

3. Verfahren nach Anspruch 2,
**dadurch gekennzeichnet,**
**dass** die selbsttätige Geschwindigkeitseinstellung nur aktiv ist, solange der Abstand (Δs) zwischen Fahrzeug (1) und Hindernis eine Stoppgrenze (s_{SG}) überschreitet, wobei die Stoppgrenze (s_{SG}) geringer ist als die Nahgrenze (s_{NG}).

4. Verfahren nach einem der Ansprüche 1 bis 3,
**dadurch gekennzeichnet,**
**dass** die selbsttätige Geschwindigkeitseinstellung ausschließlich im niederen Geschwindigkeitsbereich eingesetzt wird und als Grenzgeschwindigkeit eine Kriechgeschwindigkeit (v_{Kr}) vorgegeben wird.

5. Verfahren nach einem der Ansprüche 1 bis 4,
**dadurch gekennzeichnet,**
**dass** bei Unterschreiten einer Stoppgrenze (s_{SG}) zwischen Fahrzeug (1) und Hindernis das Fahrzeug (1) selbsttätig bis zum Stillstand abgebremst wird.

6. Verfahren nach einem der Ansprüche 1 bis 5,
**dadurch gekennzeichnet,**
**dass** bei still stehendem Fahrzeug (1) mit Automatikgetriebe selbsttätig der Leerlauf eingestellt wird.

7. Verfahren nach einem der Ansprüche 1 bis 6,
**dadurch gekennzeichnet,**
**dass** die selbsttätige Geschwindigkeitseinstellung abgeschaltet wird, falls vom Fahrer eine die Fahrzeug-Sollgeschwindigkeit übersteigende Fahrzeug-Istgeschwindigkeit eingestellt wird.

8. Verfahren nach einem der Ansprüche 1 bis 7,
**dadurch gekennzeichnet,**
**dass** bei aktivierter selbsttätiger Geschwindigkeitseinstellung zumindest in Beschleunigungs- und Abbremsphasen ein Mindest-Bremsmoment (M_{Br}) erzeugt wird.

9. Verfahren nach Anspruch 8,
**dadurch gekennzeichnet,**
**dass** das Bremsmoment (M_{Br}) bei Abschaltung der selbsttätigen Geschwindigkeitseinstellung gemäß einer vorgegebenen Kennlinie reduziert wird.

10. Verfahren nach Anspruch 8 oder 9,
**dadurch gekennzeichnet,**
**dass** das Bremsmoment (M_{Br}) reduziert wird, falls der Abstand (Δs) eine Distanzschwelle (s_{WG}) überschreitet.

11. Verfahren nach einem der Ansprüche 8 bis 10,
**dadurch gekennzeichnet,**
**dass** das Motormoment (M_{M}) über den Wert des Bremsmoments (M_{Br}) erhöht wird, falls der Abstand (Δs) eine Distanzschwelle (s_{WG}) überschreitet.

12. Verfahren nach einem der Ansprüche 8 bis 11,
**dadurch gekennzeichnet,**
**dass** auch bei konstanter Fahrzeug-Istgeschwindigkeit (v) ein Bremsmoment (M_{Br}) erzeugt wird, welches jedoch geringer ist als das Antriebsmoment (M_{M}).

13. Einrichtung zur selbsttätigen Geschwindigkeitseinstellung in einem Fahrzeug, insbesondere Einrichtung zur Durchführung des Verfahrens nach einem der Ansprüche 1 bis 12, mit einer Messvorrichtung (3) zur Ermittlung des Abstands (Δs) und der Relativgeschwindigkeit (Δv) zwischen dem Fahrzeug (1) und einem Hindernis, einer Regel- und Steuereinheit (5), in der in Abhängigkeit von in der Messvorrichtung (3) erzeugten Messsignalen Stellsignale generiert werden, die Stellorganen im Fahrzeug (1) zur selbsttätigen Einstellung der Fahrzeug-Istgeschwindigkeit (v) an eine Fahrzeug-Sollgeschwindigkeit (vₛₒₗₗ) zuführbar sind,
**dadurch gekennzeichnet,**
**dass** die Stellsignale in der Regel- und Steuereinheit (5) in der Weise erzeugbar sind, dass im Falle eines sich vom Fahrzeug (1) entfernenden Hindernisses die Fahrzeug-Sollgeschwindigkeit (vₛₒₗₗ) auf die Geschwindigkeit des Hindernisses (v_{H}), jedoch maximal auf eine zulässige Grenzgeschwindigkeit (v_{Kr}) beschränkt wird.

## Claims

1. Method for automatically setting the speed in a vehicle, in which the distance (Δs) and the relative speed (Δv) between the vehicle (1) and an obstacle are sensed and are used as the basis for the calculation of a braking torque or drive torque which is to be generated independently of the driver and by means of which the vehicle actual speed (v_{act}) is automatically approximated to a vehicle setpoint speed (vₛₑₜₚ), **characterized in that** a maximum permissible limiting speed (v_{Kr}) is predefined or determined, and **in that**, in the case of an obstacle which is moving away from the vehicle (1), the vehicle setpoint speed (vₛₑₜₚ) is set to the speed of the obstacle (v_{H}), but restricted at maximum to the limiting speed (v_{Kr}).

2. Method according to Claim 1, **characterized in that** the automatic setting of the speed is active only as long as the distance (Δs) between the vehicle (1) and the obstacle drops below a proximity limit (s_{NG}).

3. Method according to Claim 2, **characterized in that** the automatic setting of the speed is active only as long as the distance (Δs) between the vehicle (1) and obstacle exceeds a stopping limit (s_{SG}), the stopping limit (s_{SG}) being smaller than the proximity limit (s_{NG}).

4. Method according to one of Claims 1 to 3, **characterized in that** the automatic setting of the speed is used exclusively in the low speed range and a crawling speed (v_{Kr}) is predefined as the limiting speed.

5. Method according to one of Claims 1 to 4, **characterized in that**, when a stopping limit (s_{SG}) between the vehicle (1) and obstacle is undershot, the vehicle (1) is automatically braked to a standstill.

6. Method according to one of Claims 1 to 5, **characterized in that** the idling mode is automatically set when a vehicle (1) with an automatic gearbox is stationary.

7. Method according to one of Claims 1 to 6, **characterized in that** the automatic setting of the speed is switched off if the vehicle actual speed which exceeds the vehicle setpoint speed is set by the driver.

8. Method according to one of Claims 1 to 7, **characterized in that** when the automatic setting of the speed is activated, a minimum braking torque (M_{Br}) is generated at least in acceleration and braking phases.

9. Method according to Claim 8, **characterized in that**, when the automatic setting of the speed is switched off, the braking torque (M_{Br}) is reduced in accordance with a predefined characteristic curve.

10. Method according to Claim 8 or 9, **characterized in that** the braking torque (M_{Br}) is reduced if the distance (Δs) exceeds a distance threshold (s_{WG}).

11. Method according to one of Claims 8 to 10, **characterized in that** the engine torque (M_{M}) is increased above the value of the braking torque (M_{Br}) if the distance (Δs) exceeds a distance threshold (s_{WG}).

12. Method according to one of Claims 8 to 11, **characterized in that**, even when the vehicle actual speed (v) is constant, a braking torque (M_{Br}) is generated which is however smaller than the drive torque (M_{M}) .

13. Device for automatically setting the speed in a vehicle, in particular device for carrying out the method according to one of Claims 1 to 12, having a measuring device (3) for determining the distance (Δs) and the relative speed (Δv) between the vehicle (1) and an obstacle, a control unit (5) in which actuation signals which can be fed to actuation elements in the vehicle (1) for automatically setting the vehicle actual speed (v) to a vehicle setpoint speed (vₛₑₜₚ) are generated as a function of measurement signals generated in the measuring device (3), **characterized in that** the actuating signals can be generated in the control unit (5) in such a way that, in the case of an obstacle which is moving away from the vehicle (1), the vehicle setpoint speed (vₛₑₜₚ) is restricted to the speed of the obstacle (v_{H}), but at maximum to a permissible limiting speed (v_{Kr}).

## Revendications

1. Procédé pour le réglage automatique de la vitesse d'un véhicule, selon lequel la distance (Δs) et la vitesse relative (Δv) entre le véhicule (1) et un obstacle sont déterminées de manière sensorielle et servent de base pour le calcul d'un couple de freinage ou d'un couple moteur à générer indépendamment du véhicule, par l'intermédiaire duquel la vitesse réelle du véhicule (Vᵢₛₜ) est adaptée automatiquement à une vitesse théorique du véhicule (Vₛₒₗₗ),
**caractérisé en ce que**
une vitesse limite maximale admissible (V_{Kr}) est prédéfinie ou déterminée et **en ce que**, dans le cas d'un obstacle s'éloignant du véhicule (1), la vitesse théorique du véhicule (Vₛₒₗₗ) est limitée à la vitesse de l'obstacle (V_{H}), mais au maximum à la vitesse limite (V_{Kr}).

2. Procédé selon la revendication 1,
**caractérisé en ce que**
le réglage automatique de la vitesse n'est actif que tant que la distance (Δs) entre le véhicule (1) et l'obstacle est inférieure à une limite proximale (S_{NG}).

3. Procédé selon la revendication 2,
**caractérisé en ce que**
le réglage automatique de la vitesse n'est actif que tant que la distance (Δs) entre le véhicule (1) et l'obstacle est inférieure à une limite d'arrêt (S_{SG}), la limite d'arrêt (S_{SG}) étant inférieure à la limite proximale (S_{NG}).

4. Procédé selon l'une quelconque des revendications 1 à 3,
**caractérisé en ce que**
le réglage automatique de la vitesse est utilisé exclusivement dans la plage de petite vitesse et une vitesse de fluage (V_{KR}) est prédéfinie comme vitesse limite.

5. Procédé selon l'une quelconque des revendications 1 à 4,
**caractérisé en ce que**
en cas de sous-dépassement d'une limite d'arrêt (S_{SG}) entre le véhicule (1) et l'obstacle, le véhicule (1) est freiné automatiquement jusqu'à l'arrêt.

6. Procédé selon l'une quelconque des revendications 1 à 5,
**caractérisé en ce que**
lorsque le véhicule (1) est à l'arrêt avec une transmission automatique, le ralenti est réglé automatiquement.

7. Procédé selon l'une quelconque des revendications 1 à 6,
**caractérisé en ce que**
le réglage automatique de la vitesse est arrêté lorsqu'une vitesse réelle du véhicule dépassant la vitesse théorique du véhicule est réglée par le conducteur.

8. Procédé selon l'une quelconque des revendications 1 à 7,
**caractérisé en ce que**
lorsque le réglage automatique de la vitesse est activé, un couple de freinage minimal (M_{Br}) est généré au moins pendant les phases d'accélération et de freinage.

9. Procédé selon la revendication 8,
**caractérisé en ce que**
le couple de freinage (M_{Br}) est réduit en fonction d'une courbe prédéfinie en cas d'arrêt du réglage automatique de la vitesse.

10. Procédé selon la revendication 8 ou 9,
**caractérisé en ce que**
le couple de freinage (M_{Br}) est réduit si la distance (Δs) dépasse un seuil de distance (S_{WG}).

11. Procédé selon l'une quelconque des revendications 8 à 10,
**caractérisé en ce que**
le couple moteur (M_{M}) est augmenté au-delà du couple de freinage (M_{Br}) si la distance (Δs) dépasse un seuil de distance (S_{WG}).

12. Procédé selon l'une quelconque des revendications 8 à 11,
**caractérisé en ce que**
même avec une vitesse réelle constante du véhicule (v), un couple de freinage (M_{Br}) est généré, mais il est inférieur au couple moteur (M_{M}).

13. Dispositif pour le réglage automatique de la vitesse d'un véhicule, en particulier dispositif pour la réalisation du procédé selon l'une quelconque des revendications 1 à 12, avec un dispositif de mesure (3) pour la détermination de la distance (Δs) et de la vitesse relative (Δv) entre le véhicule (1) et un obstacle, une unité de réglage et de commande (5) dans laquelle des signaux de réglage sont générés en fonction de signaux de mesure générés dans le dispositif de mesure (3), lesquels signaux de réglage peuvent être envoyés à des organes de réglage dans le véhicule (1) pour l'adaptation automatique de la vitesse réelle du véhicule (V) à une vitesse théorique du véhicule (Vₛₒₗₗ),
**caractérisé en ce que**
les signaux de réglage dans l'unité de réglage et de commande (5) peuvent être générés de telle manière que, dans le cas d'un obstacle s'éloignant du véhicule (1), la vitesse théorique du véhicule (Vₛₒₗₗ) est limitée à la vitesse de l'obstacle (V_{H}), mais au maximum à une vitesse limite admissible (V_{Kr}).
